Europäisches Patentamt

European Patent Office

Office européen des brevets

(19)

(11) Veröffentlichungsnummer: **0 154 125**
**B1**

(12) **EUROPÄISCHE PATENTSCHRIFT**

(45) Veröffentlichungstag der Patentschrift: **08.08.90**

(21) Anmeldenummer: **85100477.0**

(22) Anmeldetag: **18.01.85**

(51) Int. Cl.⁵: **H 04 N 7/137**

(54) **Verfahren zur bewegungsadaptiven Interpolation von Fernsehbildsequenzen sowie Anordnung und Anwendungen hierzu.**

(30) Priorität: **05.03.84 DE 3408061**

(43) Veröffentlichungstag der Anmeldung:
**11.09.85 Patentblatt 85/37**

(45) Bekanntmachung des Hinweises auf die
Patenterteilung:
**08.08.90 Patentblatt 90/32**

(84) Benannte Vertragsstaaten:
**DE FR GB IT NL**

(56) Entgegenhaltungen:
**DE-B-2 336 856**
**US-A-3 715 483**
**US-A-3 824 590**
**US-A-4 383 272**

(73) Patentinhaber: **ANT Nachrichtentechnik GmbH**
**Gerberstrasse 33**
**D-7150 Backnang (DE)**

(72) Erfinder: **Bergmann, Hans, Dr. C.**
**Meisenstrasse 12**
**D-6078 Neu-Isenburg 2 (DE)**
Erfinder: **Musmann, Hans-Georg, Dr.**
**Heckenrosenweg 24**
**D-3320 Salzgitter-Bad (DE)**

Courier Press, Leamington Spa, England.

**Beschreibung**

Die Erfindung betrifft ein Verfahren gemäß dem Oberbegriff des Patentanspruchs 1, eine Anordnung gemäß dem Oberbegriff des Patentanspruchs 4 sowie Anwendungen des Verfahrens. Ein Verfahren gemäß dem Oberbegriff des Patentanspruchs 1 ist bekannt ("Motion-adaptive Interpolation of Television Frames", Netravali/Robbins; "Motion-adaptive Interpolation of eliminated TV-Fields", Bergmann; beide in Proc. of the Picture Coding Symposium 1981, Montreal, Canada).

Eine Anordnung gemäß dem Oberbegriff des Patentanspruchs 2 ist bekannt aus US—A—43 83 272.

Zur Reduktion der Übertragungsrate von digitalen Fernsehbildsequenzen wurden mehrere Vorschläge veröffentlicht, die hauptsächlich die Auslassung einzelner Fernsehbildsequenzen (Fernsehhalbbilder — bzw. Vollbilder) auf der Sendeseite vorsehen sowie Bild-Interpolationsmethoden auf der Empfängerseite (Netravali, Bergmann sowie "Codierung von Fernsehsignalen für niedrige Übertragungsbitraten", Klie, Disserstation, Universität Hannover, 1978).

Ein relativ einfaches Interpolationsverfahren wird von Klie beschreiben. Die Luminanzwerte von Bildelementen (Pels) innerhalb der ausgelassenen Frames werden dort aus den korrespondierenden Pels in den übertragenen Bildern zur zeitlichen Mittelung gewonnen. Der Nachteil dieses Verfahrens ist die unzulängliche Rekonstruktion bewegter Bildbereiche. Reine zeitliche Interpolation führt zu verschmierten Konturen im Falle langsamer Bewegungen. Bei schneller Bewegung führt diese Interpolation zur Mehrfachdarstellung der bewegten Bildteile, was zu einer ruckartigen Bewegungsrekonstruktion in der Bildsequenz führt. Zur Verbesserung dieser Unzulänglichkeit wurden adaptive Interpolationsverfahren entwickelt (Netravali, Bergmenn, s.o.). Hierbei wird das zu rekonstruierende Fernsehbild mittels eines Segmentierers in stationäre und bewegte Anteile zerlegt. Dann wird jedes Bildelement innerhalb bewegter Bereiche einem Displacement Estimator zugeführt, um einen Referenzwert für den Betrag der Bewegung zu erhalten. Für die Luminanzsignalinterpolation in den bewegten Bildbereichen können nun die entsprechend versetzten Pels aus den übertragenen Bildern benutzt werden. Mittels dieses Interpolationsverfahrens kann die Bildqualität für kleine Displacements sichtbar verbessert werden. Wie detaillierte Untersuchungen jedoch zeigten, versagt diese bewegungsadaptive Interpolation bei großen Displacements wegen der Ungenauigkeit des dort benutzten Displacement Estimators und Segmentierers.

Aus US—A—4,383,272 ist eine Anordnung zur Interpolation ausgelassener Fernsehbilder aus übertragenen Fernsehbildern bekannt. Aus zwei nacheinander übertragenen Bildsequenzen wird dort eine Differenz gebildet. Zur Displacementschätzung wird als Korrekturwert der Gradient des mittleren quadratischen Fehlers zweier aufeinanderfolgender Bilder herangezogen. Wenn bei der Differenzbildung ein bestimmter Schwellwert überschritten wird, erfolgt eine bewegungsadaptive Interpolation, ansonsten wird ein Schätzwert statisch durch Mittelung aus vier Nachbarwerten gewonnen. Bei der bewegungsadaptiven Interpolation hinsichtlich der Bildung von Displacementschätzwerten erfolgt eine Multiplikationskoeffizientenbewertung in Abhängigkeit des zeitlichen Abstandes des zu verarbeitenden Halbbildes. Die verwendeten bilinearen Interpolatoren weisen jeweils Eingänge auf zur Verarbeitung nicht ganzzahliger Displacementschätzwerte. Die Ausgänge der bilinearen Interpolatoren sind über ein Summationsnetzwerk geführt. Eine echte Bildsegmentierung erfolgt bei der Anordnung gemäß US—A—4,383,272 nicht. Es wird lediglich anhand der Größe des Betrages der Differenz eines aktuellen bildes (field) und eines vorangegangenen Bildes zwischen statischer und bewegungsadaptiver Interpolation umgeschaltet.

Aufgabe der Erfindung ist es, ein Verfahren gemäß dem Oberbegriff des Patentanspruchs 1 so auszugestalten, daß die Interpolation sicherer und genauer ist. Insbesondere soll der Interpolationsprozeß auch für große Displacements ohne Beeinträchtigung der Bildqualität möglich sein. Eine geeignete Anordnung zum Durchführen des Verfahrens soll ebenfalls angegeben werden sowie vorteilhafte Anwendungen dieses Verfahrens. Diese Aufgabe wird bezüglich des Verfahrens durch die kennzeichnenden Merkmale des Patentanspruchs 1 gelöst, bezüglich der Anordnung durch den Patentanspruch 4 und bezüglich der Anwendungen durch die Ansprüche 5, 6 oder 8. Durch die Ansprüche 2, 3 und 7 sind vorteilhafte Ausgestaltungen des Verfahrens bzw. der Anwendungen aufgezeigt. Die Displacement-schätzung beim Verfahren nach der Erfindung weist eine sehr schnelle Konvergenz auch bei großen Displacements auf.

Anhand der Zeichnungen wird die Erfindung nun näher erläutert. Es zeigen

Fig. 1 ein Blockschaltbild für den bewegungsadaptiven Bild-Interpolator,

Fig. 2 das bewegungsabhängige Interpolationsschema für verschiedene Bildsegmente,

Fig. 3 eine Blockschaltung für die Bildsegmentierung,

Fig. 4 eine eindimensionale Anordnung zur Bestimmung des Displacements,

Fig. 5 ein Schema zur bewegungsabhängigen Interpolation innerhalb bewegter Bildbereiche,

Fig. 6 ein Blockschaltbild des bewegungsadaptiven Interpolators,

Fig. 7 eine Tabelle für die Adaptierung der Filterkoeffizienten.

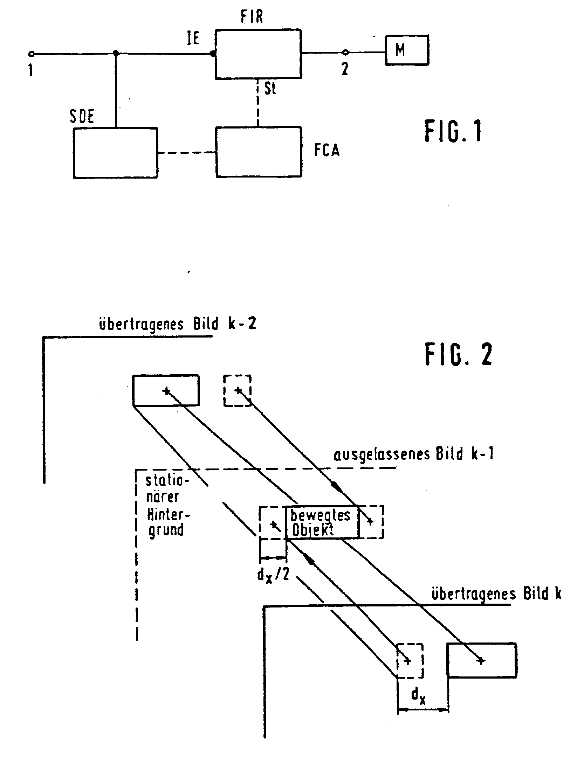

In einem auf dem erfindungsgemäßen Verfahren basierenden Ausführungsbeispiel gemäß Fig. 1 wird das Prinzip der Erfindung erläutert. Der bewegungsadaptive Interpolator ist dreistufig aufgebaut und umfaßt eine Segmentierungs- und Displacement-Estimationseinrichtung SDE, eine Filterkoeffizienten-Adaptionseinrichtung FCA und ein dreidimensionales Interpolationsfilter FIR. Dem Eingang 1 werden die Fernsehbildsequenzen — digitale Videosignale — zugeführt. Diese werden sowohl von der segmentierungs- und Displacement-Estimationseinrichtung SDE wie auch vom Interpolationsfilter FIR ausgewertet. Das Interpolationsfilter FIR weist einen Steuereingang St auf, welcher mit der Filterkoeffizienten-Adaptionseinrichtung FCA verbunden ist. Die Filterkoeffizienten-Adaptionseinrichtung FCA wird eingangsseitig mit den Ausgangssignalen der Segmentierungs- und Displacement-Estimationseinrichtung SDE beaufschlagt. In der ersten Stufe DSE werden zwei übertragene Fernsehbilder (Frames) zwichengespeichert und segmentweise mit Hilfe einer geeigneten Segmentierungsvereinbarung zerlegt in stationäre Anteile, bewegte Anteile, durch die Bewegung wieder sichtbar werdender Hintergrund und Hintergrund, der durch die Bewegung neu überdeckt wird. Basierend auf der Segmentinformation und den Displacement Schätzwerten kann für jedes zu interpolierende Bildelement (Pel) ein passender Satz von Filterkoeffizienten in der zweiten Stufe FCA bestimmt werden. Die dritte Stufe FIR ermittelt die Luminanzwerte ausgelassener Bilder anhand der übertragenen, bei Anwendung des Interpolators zur Rekonstruktion sendeseitig ausgelassener Bilder, oder ermittelt anhand der übertragenen Frames zusätzliche Bilder, um auf dem Monitor die Bilddarstellungsfrequenz dadurch zu erhöhen, daß die zusätzlich generierten Bilder jeweils zwischen standardisiert dargestellten Bildern auf dem Wiedergabemonitor M dargestellt werden. Damit its eine Flimmerbefreiung bei der Standard-Fernsehübertragung möglich.

Für die Interpolation von ausgelassenen oder von zusätzlich zu generierenden Fernsehbildern wird eine Pel-Vereinbarung für vier unterscheidbare charakteristische Segmentinformationen benötigt, wobei jedem Segment ein spezifischer Satz von Filterkoeffizienten zugeordnet ist.

Fig. 2 zeigt ein Beispiel für diese Pel-Vereinbarung mittels dreier unmittelbar aufeinanderfolgender Bilder mit einem bewegten Objekt vor einem unbewegten Hintergrund. Die Bildinformation innerhalb des Bildes $k-1$ besteht aus dem stationären Hintergrund und einem Objekt mit dem Displacement $d_x/2$. Auf der linken Seite der Objektbegrenzung wird stationärer Hintergrund sichtbar, der beim Bild $k-2$ noch bedeckt war. Auf der rechten Seite der Objektbegrenzung ist stationärer Hintergrund noch sichtbar, welcher im Bild $k$ überdeckt wird. Um das ausgelassene Bild $k-1$ rekonstruieren, bzw. ein Bild $k-1$ zusätzlich zu generieren, muß jedes Segment aus den übertragenen Bildern gemäß den markierten Pfeilen in Fig. 2 interpoliert werden.

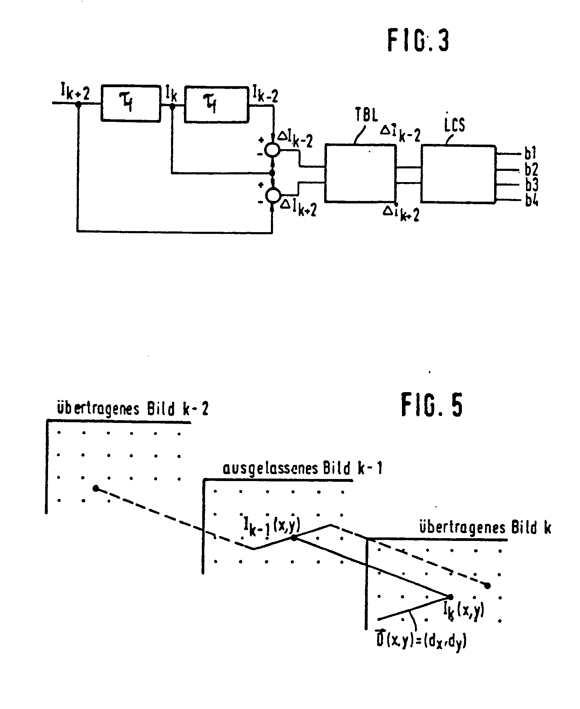

Für die Segmentierung eines zu interpolierenden Bildes wird ein Verfahren verwendet, welches in Verbindung mit der Blockschaltung nach Fig. 3 nun näher erläutert wird. Gemäß Fig. 3 werden die Bild-Differenzen $\Delta I_{k-2}$, bzw. $\Delta I_{k+2}$, des Fernsehsignals für drei aufeinanderfolgende entsprechende Bilder $I_{k+2}$, $I_k$ und $I_{k-2}$ ermittelt. Diese Bild-Differenzsignale $\Delta I_{k-2}$, bzw. $\Delta I_{k+2}$, werden einer Schwellwert- und binären Begrenzerstufe TBL zugeführt. An deren Ausgang sind zwei logische Veriablen $\Delta i_{k-2}$ und $\Delta i_{k+2}$ verfügbar, die Masken für die unveränderten und veränderten Bereiche innerhalb von drei Bildern liefern. In einer nachfolgenden Kombinationsstufe LCS wird mit den Beziehungen:

$$\Delta i_{k-2} \quad \& \quad \Delta i_{k+2} = b_1$$

$$\Delta i_{k-2} \quad \& \quad \overline{\Delta i_{k+2}} = b_2$$

$$\overline{\Delta i_{k-2}} \quad \& \quad \Delta i_{k+2} = b_3$$

$$\overline{\Delta i_{k-2}} \quad \& \quad \overline{\Delta i_{k+2}} = b_4$$

jedem Bildelement eines von vier im voraus definierten charakteristischen Bildsegmenten zugeordnet. In den bewegten Bildsegmenten wird die Displacement-Estimation anhand der folgenden Rekursionsformel für das Displacement $d_x$

$$d_{x(i)} = d_{x(i-1)} - 2 \frac{\sum_w [I_{k-2}(x-d_x,y-d_y)_{(i-1)} - I_{k(x,y)}] \, \partial/\partial x \, I_{k(x,y)}}{\sum_w [\partial/\partial x \, I_{k-2}(x-d_x,y-d_y)_{(i-1)} + \partial/\partial x I_{k(x,y)}] \partial/\partial x I_{k(x,y)}}$$

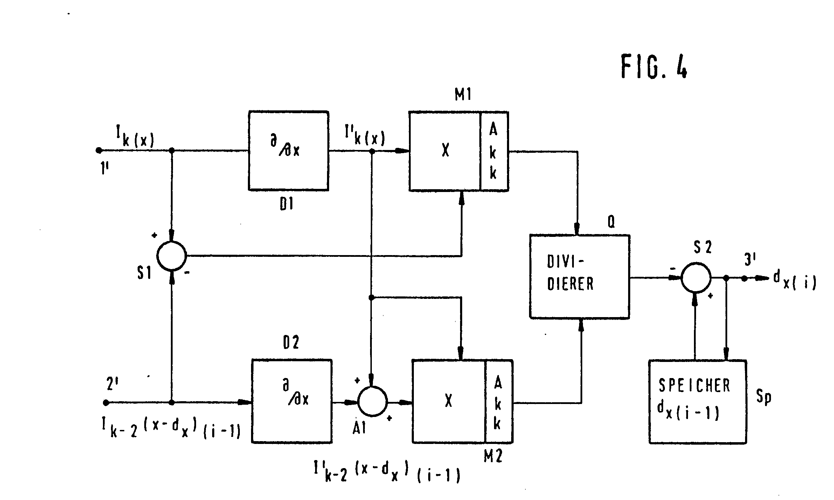

vorgenommen, wobei w ein rechteckiges Bildfenster und i einen Rekursionsschritt bezeichnet. Für die vertikale Richtung y wird das Displacement $d_y$ entsprechend ermittelt. Diese Beziehung für $d_{x(i)}$ ist eine Rekursionsformel, mit welcher sich ein neuer Schätzwert $d_{x(i)}$ immer aus dem gerade zuvor ermittelten Schätzwert $d_{x(i-1)}$ und einem Korrekturwert ergibt. Im ersten Schritt wird $d_{x(i)}$ mit $d_{x(i-)} = 0$ ermittelt und im zweiten Schritt erfolgt die Ermittelung von $d_{x(i+1)}$ mit $d_{x(i)}$ aus dem ersten Schritt, usw. Wie aus Fig. 4 hervorgeht, wird über den Subtrahierer S1 die Differenz der den Signaleingängen 1 und 2 zugeführten

Bilder $I_{k(x)}$ und $I_{k-2}(x-dx)$ (i-1) gebildet. Beide Bilder $I_{k(x)}$ und $I_{k-2}(x-d_x)_{(l-1)}$ werden über Differenzierer D1 und D2 geführt, sodaß an deren Ausgänge die 1. Ableitungen der Bilder verfügbar sind. Die Multiplizierer M1 und M2 sind zusätzlich mit einer Akkumulationseinrichtung Akk ausgestattet, mit der die multiplizierten Signale aufsummiert werden — im Ausführungsbeispiel erfolgt diese Aufsummierung über ein Bildfenster w. Für den Multiplizierer M1 ist das dem ersten Multiplizierereingang zugeführte Signal das Ausgangssignal des Differenzierers D1 und das dem zweiten Multiplizierereingang zugeführte Signal das Ausgangssignal des Subtrahierers S1. Dem Multiplizierer M2 wird das Ausgangssignal des Differenzierers D1 sowie das Ausgangssignal eines Addierers A1 zugeführt, welcher die Ausgangssignale der beiden Differenzierer D1 und D2 verknüpft mittels des Dividierers Q, dem die Ausgangssignale von M1 und M2 zugeführt sind. Das Ergebnis der Division wird mit dem Faktor 2 gewichtet. Der aktuelle Schätzwert $d_{x(i)}$ wird mittels des Subtrahierers S2 durch Verknüpfung des beim letzten Rekursionsschritt ermittelten Schätzwertes, der im Speicher Sp abgelegt ist, und dem Korrekturwert — Ausgangssignal des Dividierers Q — gewonnen. Der Speicher Sp weist zum Einlesen des zuvor ermittelten Schätzwertes eine Verbindung zum Ausgang 3 des Subtrahierers S2 auf, der gleichzeitig den Ausgang der Anordnung darstellt. Um dafür Sorge zu tragen, daß die Signale $I_{k(x)}$ und $I_{k-2}(x-d_x)_{(-1)}$ zusammen auswertbar sind, ist dem Signaleingang 1' der Anordnung eine Signalverzögerungseinrichtung (nicht dargestellt) vorgeschaltet, die das Luminanzsignal $I_{k(x)}$ um die Dauer zweier Halbbilder verzögert.

Eine theoretische und experimentelle Analyse zeigte, daß diese Displacement-Schätzwertbestimmung eine verbesserte Konvergenz und eine erhöhte Genauigkeit gegenüber anderen Schätzverfahren aufweist.

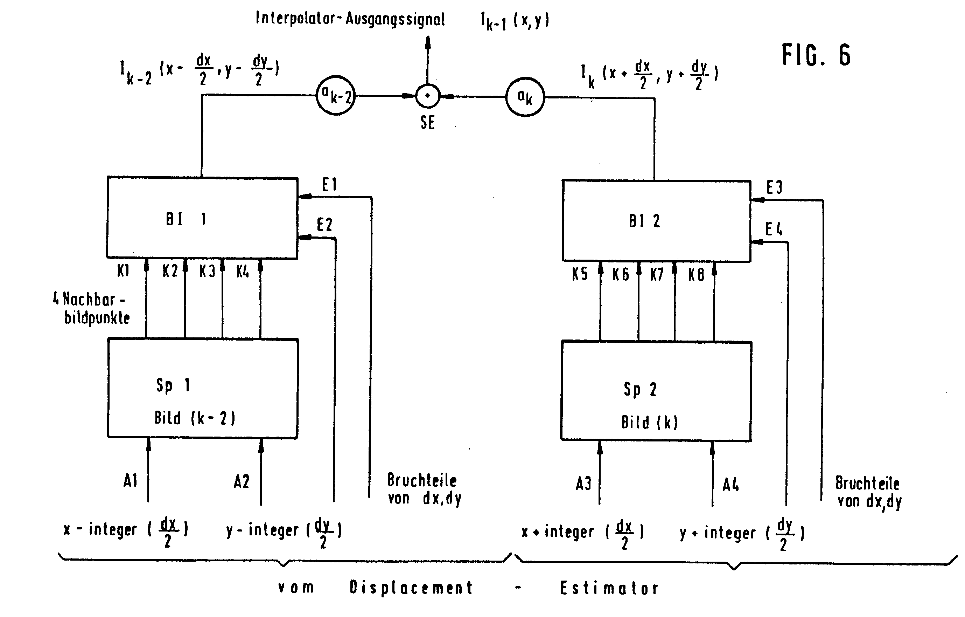

Entsprechend der Segmentinformation und den Displacement-Schätzwerten für jedes Bildelement wird in der Stufe FCA ein spezifischer Satz von Filterkoeffizienten für das mehrdimensionale (räumlich und zeitlich) Interpolationsfilter FIR bestimmt. Fig. 5 zeigt schematisch die lokale Koeffizientenbestimmung im Falle bewegter Bildelemente. Dabei soll aus den Bildfeldern k-2 und k das Luminanzsignal $I_{k-1}(x,y)$ interpoliert werden, welches zum bewegten Bereich gehört. Da eine Displacement-Schätzung an der Stelle (x,y) nur für das Bildfeld k und nicht für das Bild k-1 gilt, wird diese Displacement-Schältung D dem Luminanzsignal $I_{k-1}(x,y)$ zugeordnet, wobei angenommen wird, daß die Displacements von Pel zu Pel nahezu konstant sind. Der interpolierte Luminanzwert ist dann durch folgenden Zusammenhang festgelegt:

$$I_{k-1}(x,y) = a_{k-2}(x-d_x/2, \; y-d_y/2) \cdot I_{k-2}(x-d_x/2, \; y-d_y/2)$$

$$+ \quad a_k(x+d_x/2, \; y+d_y/2) \cdot I_k(x+d_x/2, \; y+d_y/2)$$

mit dem Koeffizienten:

$$a_{k-2}(x-d_x/2, \; y-d_y/2) \quad = 1/2$$

$$a_k(x+d_x/2, \; y+d_y/2) \quad = 1/2$$

Im Falle von nicht ganzzahligen Displacements, beispielsweise (3,5 pel/1,7 pel), sind die Luminanz (-oder Chrominanzwerte) $I_{k-2}(x-d_x/2, \; y-d_y/2)$ und $I_k(x+d_x/2, \; y+d_y/2)$ interpolierte Werte, die durch bilineare Interpolation unter Auswertung vier benachbarter Bildelement-Luminanzwerte erhältlich sind. Wenn mehr als ein Bild ausgelassen wurde, müssen die Displacement-Gewichtungsfaktoren von $a_k$, $a_{k-2}$ in der Beziehung von $I_{k-1}(x,y)$ entsprechend den zeitlichen Abständen der übertragenen Bilder gewählt werden. Für den stationären Hintergrund werden die Luminanzwerte durch linear zeitliche Interpolation ermittelt, z.B.

$$a_{k-2}(x,y) = 1/2$$

$$a_k(x,y) = 1/2.$$

In Bildbereichen, die im zu interpolierenden Bild zu Segmenten gehören, die dem sichtbar werdenden Hintergrund bzw. dem neu zu überdeckenden Hintergrund zugeordnet sind, müssen sowohl die Segmentinformationen wie auch die Displacement-Schätzwerte in Betracht gezogen werden, um eine exakte Rekonstruktion, bzw. Interpolation, zu erhalten. Da das ermittelte Segment "neu zu überdeckender Hintergrund" nur für das Bild k und nicht für das Bild k-1, welches interpoliert werden muß, gültig ist, müssen zusätzlich die Displacement-Schätzwerte, in diesem Falle die durch 2 dividierten Werte, ausgewertet werden. Wenn ein solcher Displacement-Vektor in das Segment "neu zu überdeckender Hintergrund" gereicht ist, gehört das zugeordnete Pel auch zum Segment "neu zu überdeckender Hintergrund". Das zugeordnete Pel kann mittels der Koeffizienten

$$a_{k-2}(x,y) = 1$$

$$a_k(x,y) = 0$$

4

rekonstruiert, bzw. generiert werden. Andernfalls endet der Displacement-Vektor innerhalb des bewegten Gebiets und das zugehörige Pel wird als zum bewegten Gebiet gehörig bestimmt. Für das Segment "sichtbar werdender Hintergrund" wird eine ähnliche Entscheidungsfindung angewandt.

Fig. 6 zeigt ein Blockschaltbild des bewegungsadaptiven Interpolators FIR. Es ist jeweils ein Speicher — Sp1 und Sp2 — für das Bildfeld k-2 und das Bildfeld k vorgesehen. Über Adressiereingänge A1, A2, bzw. A3, A4, wird diesen Speichern jeweils der Ort (x,y) +/− dem halben Schätzwert am Ausgang des Displacement-Estimators zugeführt und zwar jeweils nur der ganzzahlige Schätzwert für die Schätzung in x-Richtung — A1 und A3 — und in y-Richtung — A2 und A4 —. Einem bilinearen räumlichen Interpolator — Bl 1 für das Bild- — k-2 und Bl 2 für das Bild k — werden jeweils aus einem der Speicher Sp1 und Sp2 vier benachbarte Bildpunkte über die Eingänge K1 bis K8 zugeführt. Über die Eingänge E1 bis E4 werden den Interpolatoren Bl1 und Bl2 jeweils die Bruchteile dx und dy der Displacement-Schätzwerte zugeführt, die für die ganzzahligen Displacement-Schätzwerte (Eingänge A1 bis A4) unbererücksichtigt blieben. Die Interpolatoren Bl1 und Bl2 bestimmen aus den jeweils vier Nachbarbildpunkten (Pels) und den Bruchteilen dx, dy den Luminanzwert (oder Chrominanzwert) am ende des Displacement-Vektors.

Diese Signale

$$I_{k-2}(x - \frac{dx}{2}, y - \frac{dy}{2}) \text{ und } I_k(x + \frac{dx}{2}, y + \frac{dy}{2})$$

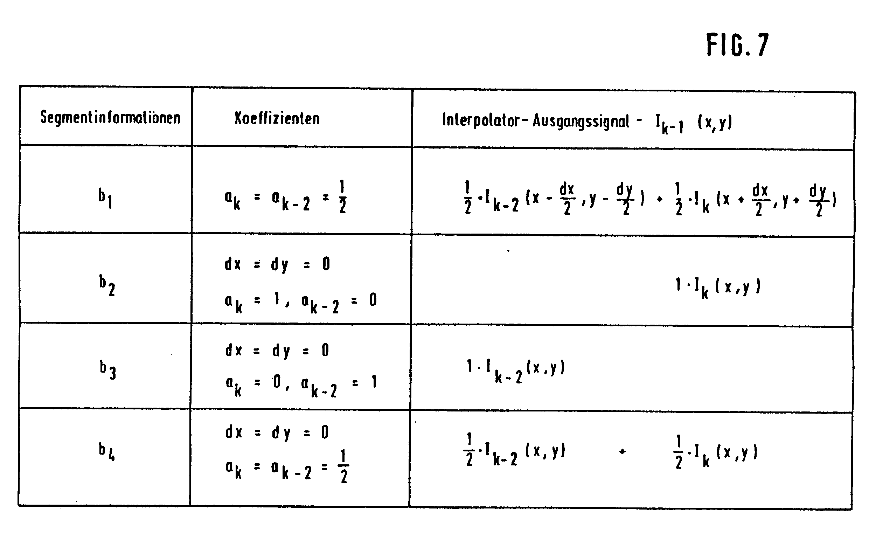

werden mit den zugehörigen Koeffizientenbewertern $a_{k-2}$ und $a_k$ gemäß der Tabelle (Fig. 7) bewertet, in die die Segmentinformationen $b_1$ bis $b_4$ wie zuvor erläutert eingehen. Die koeffizientenbewerteten Signale werden mittels der Summationseinrichtung SE summiert, sodaß am Ausgang des Interpolators der interpolierte Bildpunkt $I_{k-1}(x,y)$ zur Darstellung auf dem Monitor M verfügbar ist. Die verschiedenen Interpolationssignale $I_{k-1}(x,y)$ in Abhängigkeit der jeweiligen Segmentinformation $b_i$ sind in der Tabelle (Fig. 7) ebenfalls eingetragen. Das Blockschaltbild des bewegungsabhängigen Interpolators gemäß Fig. 6 und Tabelle gemäß Fig. 7 zur Bestimmung der Filterkoeffizienten zeigen die Filtereinstellungen für den Fall, daß jedes zweite Bild übertragen wird. Wenn nur jedes n-te Bild übertragen wird und das m-te Bild (wobei m = 1,2, . . . n-1) interpoliert wird, müssen bei den Segment-Informationen $b_1$, $b_4$ die Koeffizienten $a_k$ und $a_{k-2}$ wie folgt eingestellt werden:

$$a_{k-2} = \frac{n-m}{n} \qquad a_k = \frac{m}{n}.$$

Neben der Rekonstruktion von bei der Übertragung ausgelassener Bilder und der Flimmerbefreiung bei Standard-Fernsehbildern läßt sich das Verfahren nach der Erfindung auch zur Rauschunterdrückung bei der Wiedergabe übertragender oder aufgeweichneter Fernsehsignale, beispielsweise mittels Videorecorder, anwenden. Durch die Kenntnis der Richtung des Displacement-Vektors D läßt sich das aufgezeichnete Signal gezielt in dieser Richtung mittels des bewegungsadaptiven Interpolationsfilters FIR filtern und damit weitgehend von Rauschsignalen befreien, ohne daß bewegte Objekte bei der Wiedergabe verzerrt werden.

**Patentansprüche**

1. Verfahren zur bewegungsadaptiven Interpolation von nichtübertragenen Fernsehbildsequenzen, die aus mindestens zwei übertragenen Fernsehbildern gebildet werden, wobei die empfangenen Fernsehbilder segmentweise in stationäre und bewegte Anteile zerlegt werden und für die bewegten Anteile bildelementweise das Displacement bestimmt wird, dadurch gekennzeichnet, daß zusätzlich eine segmentweise Zerlegung der Fernsehbilder in solche Hintergrundbereiche vorgenommen wird, die durch die Bewegung wieder sichtbar werden, bzw. durch die Bewegung neu überdeckt werden, so daß insgesamt vier verschiedene charakteristische Segmentinformationen verfügbar sind, die folgendermaßen aus den beiden Bilddifferenzsignalen dreier aufeinanderfolgend übertragener Fernsehbilder gebildet werden:

eine erste Segmentinformation (b1) für bewegte Bildanteile wird durch eine UND-Verknüpfung der beiden Bilddifferenzsignale erzeugt,

eine zweite und dritte Segmentinformation (b2, b3) für durch Bewegung wieder sichtbar werdender, bzw. neu überdeckter Hintergrund wird durch eine UND-Verknüpfung jeweils eines der beiden Bilddifferenzsignale und dem jeweils inversion anderen Bilddifferenzsignal erzeugt,

eine vierte Segmentinformation (b4) für stationären Hintergrund wird durch eine UND-Verknüpfung der beiden inversen Bilddifferenzsignale erzeugt, daß interpolierte Luminanzwerte aus übertragenen Luminanzwerten für jeden Bildpunkt eines nichtübertragenen oder neu zu generienden Zwischenbildes nach folgender Beziehung gebildet werden:

$$I_{k-1}(x,y) = a_{k-2}(x-d_x/2, y-d_y/2) \cdot I_{k-2}(x-d_x/2, y-d_y/2)$$

$$+ \quad a_k(x+d_x/2, y+d_y/2) \cdot I_k(x+d_x/2, y + d_y/2)$$

mit den Koeffizienzienten:

$$a_{k-2}(x-d_x/2,\ y-d_y/2) = \frac{n-m}{n}$$

$$a_k\ (x+d_x/2),\ y+d_y/2) = \frac{m}{n}$$

wobei x und y die Ortsvariablen eines Bildes, I die Luminanzwerte eines Bildes, k den laufenden Bildendex, $d_x$ und $d_y$ die ganzzahligen Displacementkomponenten für jedes Bildelement, m die Zahl interpolierten Bilder bezüglich der Zahl n der übertragenen Bilder mit m = 1,2 ... n-1 angibt, wobei beim Auftreten der ersten und vierten Segmentinformation (b1,b4)

$$a_{k-2} = \frac{n-m}{n} \quad \text{und} \quad a_k = \frac{m}{n},$$

beim Auftreten der zweiten Segmentinformation (b2) $a_k = 1$ und $a_{k-2} = 0$, beim Auftreten der dritten Segmentinformation (b3) $a_k = 0$ und $a_{k-2} = 1$ und beim Auftreten der vierten Segmentinformation (b4) zusätzlich $d_x = d_y = 0$ gesetzt wird.

2. Verfahren nach Anspruch 1, dadurch gekennzeichnet, daß nichtganzzahlige Displacements aus den Luminanzwerten $I_{k-2}$ (x-$d_x$/2, y-$d_y$/2) und $I_k$(x+$d_x$/2, y+$d_y$/2) durch bilineare Interpolation unter Auswertung vier benachbarter Bildelement-Luminanzwerte gewonnen werden.

3. Verfahren nach Anspruch 1 oder 2, dadurch gekennzeichnet, daß das Displacement aus Schätzwerten gebildet wird, die durch Rekursionsschritte optimiert werden, indem zu einem jeweils bestimmten Schätzwert ein Korrekturwert hinzugefügt wird, so daß ein neuer Schätzwert entsteht, wobei der Korrekturwert aus einem Quotienten ermittelt wird, dessen Divisor aus der Mittelung von Ableitungen der Autokorrelationsfunktion der gerade empfangenen Bildsequenz und der Kreuzkorrelationsfunktion zwischen der gerade empfangenen und einer zuvor empfangenen Bildsequenz gewonnen wird.

4. Anordnung zur bewegungsadaptiven Interpolation von Fernsehbildsequenzen, bestehend aus einem bewegungsadaptiven Interpolator mit zwei Bildspeichern (Sp1, Sp2) für zwei übertragene Fernsehbilder ($I_{k-2}$, $I_k$), zwei bilinearen Interpolatoren (BI1, BI2) sowie vom zeitlichen Abstand aufeinanderfolgender Bilder abhängig steuerbarer Koeffizientenbewerter ($a_{k-2}$, $a_k$) und einer Summationseinrichtung (SE), wobei die Bildspeicher (Sp1, Sp2) Adressiereingänge (A1, A2, A3, A4) aufweisen, über die ihnen die Ortsinformation (x, y) über den jeweils auszuwertenden Bildpunkt unter Addition (A3, A4), bzw. Substraktion (A1, A2) der mittels eines Displacement-Estimators ermittelten ganzzahligen Displacementschätzwerte

$$\left(\frac{dx}{2},\ \frac{dy}{2}\ \right)$$

zuführbar sind, wobei die Bildspeicher (Sp1, Sp2) jeweils vier mit Eingängen der bilinearen Interpolatoren (BI1, BI2) verbundene Ausgänge zum Auslesen von jeweils vier benachbarten Bildpunkten aufweisen, wobei die bilinearen, Interpolatoren BI1, BI2 je zwei weitere Eingänge (E1, E2; E3, E4) aufweisen, über die die nichtganzzahligen Bruchteile der Displacementschätzwerte zuführbar sind, dadurch gekennzeichnet, daß zur Durchführung des Verfahrens nach einem der Ansprüche 1 bis 3 vorgesehen ist, daß die steuerbaren Koeffizientenbewerter ($a_{k-2}$, $a_k$) jeweils mit den Ausgängen der bilinearen Interpolatoren (BI1, BI2) verbunden sind, um die mittels der bilinearen Interpolatoren (BI1, BI2) bestimmten Luminanz (-oder Chrominanz)-werte in Abhängigkeit von charakteristischen Segmentinformation für die Bildbewegung zu bewerten, wobei zur Bildung der charakteristischen Segmentinformationen (b1, b2, b3, b4) eine Kombinationsstufe (LCS) vorgesehen ist, der logische Variablen ($\Delta i_{k-2}$, $\Delta i_{k+2}$) zuführbar sind, welche aus den Bild-Differenzen ($\Delta I_{k-2}$ bzw. $\Delta I_{k-2}$) eines ersten ($I_{k-2}$) und eines auf das erste Bild folgenden zweiten Bildes ($I_k$), bzw. des zweiten ($I_k$) und eines auf das zweite Bild folgenden Bildes ($I_{k+2}$), abgeleitet sind und wobei die Kombinationsstufe (LCS) derart aufgebaut ist, daß sie die folgenden Verknüpfungen besagter logischer Variablen ($\Delta i_{k-2}$, $\Delta i_{k-2}$) auszuführen in der Lage ist:

$$\Delta i_{k-2}\ \&\ \Delta i_{k+2} = b_1$$

$$\Delta i_{k-2}\ \&\ \overline{\Delta i_{k+2}} = b_2$$

EP 0 154 125 B1

$$\overline{\Delta i_{k-2}} \quad \& \quad \Delta i_{k+2} = b_3$$

$$\overline{\Delta i_{k-2}} \quad \& \quad \overline{\Delta i_{k+2}} = b_4$$

wobei $b_1$ die Segmentinformation für bewegte Bildanteile, $b_2$ die Segmentinformation für sichtbar werdenden Hintergrund, $b_3$ die Segmentinformation für neu zu überdeckenden Hintergrund und $b_4$ die Segmentinformation für statischen Hintergrund angibt, und daß die Ausgänge der Koeffizientenbewerter ($a_{k-2}$, $a_k$) an die Eingänge der Summationseinrichtung (SE) geführt sind, über deren Ausgang das bewegungsadaptiv interpolierte Ausgangssignal ($I_{k-1}$) abnehmbar ist.

5. Anwendung des Verfahrens nach Anspruch 1, 2 oder 3 zur empfangsseitigen Rekonstruktion sendeseitig ausgelassener Fernsehbilder.

6. Anwendung des Verfahrens nach Anspruch 1, 2, oder 3 zur empfangsseitigen Generierung zusätzlicher Fernsehbilder.

7. Anwendung des Verfahrens nach Anspruch 5 zur Flimmerbefreiung der Wiedergabe beim Standard-Fernsehen durch Erhöhung der Bildwiedergabefrequenz, indem die zusätzlich generierten Fernsehbilder zwischen den standardisiert dargestellten Fernsehbildern auf dem Wiedergabemonitor dargestellt werden.

8. Anwendung des Verfahrens nach Anspruch 1, 2 oder 3 zur Rauschunterdrückung bei der Wiedergabe übertragener oder mit einem Videorecorder aufgezeichneter Fernsebilder.

**Revendications**

1. Procédé pour l'interpolation, permettant l'adaptation en fonction du déplacement, de séquences d'images de télévision non transmises, séquences qui sont formées d'au moins deux images de télévision transmises, procédé dans lequel on décompose en segments, dans les portions fixes et dans les portions déplacées, les images de télévision reçues et dans lequel on détermine le déplacement par élément d'image pour les portions déplacées, caractérisé en ce que l'on procède en outre à une décomposition en segments des images de télévision dans les zones de l'arrière-plan qui deviennent à nouveau visibles du fait du déplacement, ou bien qui sont à nouveau recouvertes du fait du déplacement, de sorte qu'au total on dispose de quatre informations différentes, caractéristiques, relatives aux segments, qui se forment de la façon suivante à partir des deux signaux de différence d'image de trois images de télévision transmises successivement:

une première information (b1), relative aux segments pour des portions d'image déplacées est produit par une liaison logique ET des deux signaux de différence d'image,

une seconde et une troisième informations (b2, b3), relatives aux segments, pour l'arrière-plan qui, du fait du déplacement, va à nouveau devenir visible ou à nouveau être recouvert, sont produites par une liaison logique ET de, respectivement, l'un des deux signaux de différence d'image et l'autre signal de différence d'image, changé de signe,

une quatrième information (b4) relative aux segments pour l'arrière-plan fixe est produite par une liaison logique ET des deux signaux de différence d'image, changés de signe;

en ce que les valeurs de luminance interpolées à partir des valeurs de luminance transmises pour chaque élément d'image d'une image intermédiaire non transmise ou à générer à nouveau se forment selon la relation suivante:

$$I_{k-1}(x,y) = a_{k-2}(x-d_x/2,\ y-d_y/2) \cdot I_{k-2}(x-d_x/2,\ y-d_y/2)$$
$$+ \quad a_k(x+d_x/2,\ y+d_y/2) \cdot I_k(x+d_x/2,\ y+d_y/2)$$

avec les coefficients:

$$a_{k-2}(x-d_x/2,\ y-d_y/2) = \frac{n-m}{n}$$

$$a_k \quad (x+d_x/2),\ y+d_y/2) = \frac{m}{n}$$

où x et y sont les variables de position d'une image, I est la valeur de luminance d'une image, k est l'indice courant de l'image, $d_x$ et $d_y$ sont les composantes du déplacement, exprimées en nombre entier, pour chaque élment d'image, m est le nombre d'images interpolées par rapport au nomnbre n d'images transmises avec m = 1,2 ... n-1, étant précisé que, lors de l'intervention de la première et de la quatrième informations (b1, b4) relatives aux segments on pose

$$a_{k-2} = \frac{n-m}{n} \quad \text{et } a_k = \frac{n}{m},$$

7

lors de l'intervention de la de la deuxième information (b2) relative aux segments, on pose $a_k = 1$ et $a_{k-2} = 0$, lors de l'intervention de la troisième information (b3) relative aux segments, on pose $a_k = 0$ et $a_{k-2} = 1$ et lors de l'intervention de la quatrième information (b4) relative aux segments, on pose en outre $d_x = d_y = 0$.

2. Procédé selon la revendication 1, caractérisé en ce que l'on obtient les déplacements ne correspondant pas à un nombre entier à partir des valeurs de luminance $I_{k-2}$ ($x-d_x/2$, $y-d_y/2$) et $I_k$ ($x+d_x/2$, $y+d_y/2$) par interpolation bilinéaire avec traitement des quatres valeurs de luminance des éléments d'image voisins.

3. Procédé selon la revendication 1 ou 2, caractérisé en que l'on forme de déplacement à partir de valeurs estimées qui sont optimisées par pas de récurrence, en ce sens qu'à une valeur estimée déjà chaque fois déterminée, on ajoute une valeur correctrice de sorte qu'il apparait une nouvelle valeur estimée, étant précisé que l'on détermine la valeur correctrice à partir d'un quotient dont on obtient le diviseur à partir de la moyenne des dérivées de la fonction d'autocorrélation de la séquence d'images que l'on vient de recevoir et de la fonction de corrélation croisée entre le séquence d'images que l'on vient de recevoir et une séquence d'images reçue précédemment.

4. Dispositif pour l'interpolation, permettant l'adaption en fonction du déplacement, de séquences d'images de télévision, constitué d'un interpolateur, permettant l'adaptation du déplacement, comportant deux mémoires d'images (Sp1, Sp2) pour deux images de télévision transmises ($I_{k-2}$, $I_k$), deux interpolateurs linéaires (BI1, BI2), ainsi que les organes de valorisation des coefficients ($a_{k-2}$, $a_k$), qui peuvent être commandés en fonction de l'intervalle de temps séparant les images successives, et un organe de sommation (SE), étant précisé que les mémoires d'images (Sp1, Sp2) présentent des entrées d'adressage (A1, 12, A3, A4) par lesquelles on peut leur amener l'information de position (x, y) concernant l'élément d'image à traiter chaque fois, avec addition (A3, A4) ou soustraction (A1, A2) des valeurs estimées du déplacement

$$\left(\frac{dx}{2}, \frac{dy}{2}\right)$$

exprimées en nombre entier et déterminées au moyen d'un estimateur de déplacement, étant précisé que les mémoires d'images (Sp1, Sp2) présentent respectivement quatre sorties liées aux entrées des interpolateurs bilinéaires (BI1, BI2) pour permettre de lire en mémoire quatre éléments d'image respectivement voisins, et étant précisé que les interpolateurs bilinéaires (BI1, BI2) présentent chacun deux autres entrées (E1, E2; E3, E4) par lesquelles on peut amener les fractions, exprimées en nombre non entier, de valeurs estimées des déplacements, caractérisé en ce que pour l'exécution du procédé selon l'une des revendications 1 à 3, on prévoit que les organes de valorisation des coefficients ($a_{k-2}$, $a_k$), qui peuvent être commandés, sont respectivement liés aux sorties des interpolateurs bilinéaires (BI1, BI2), pour valoriser, en fonction de l'information, relative aux segments, caractéistique du déplacement de l'image, les valeurs de luminance (ou de chrominance) déterminées au moyen des interpolateurs bilinéaires (BI1, BI2), étant précisé que pour former les informations caractéristiques (b1, b2, b3, b4) relatives aux segments, on prévoit un étage de combinaison (LCS) auquel on peut amener des variables logiques ($\Delta i_{k-2}$, $\Delta i_{k+2}$) qui sont déduites des différences d'image ($\Delta I_{k-2}$ ou $\Delta I_{k+2}$) d'une première ($I_{k-2}$) et d'une deuxième image ($I_k$), qui suit la première image, ou bien de la deuxième ($I_k$) et d'une image ($I_{k+2}$) qui suit la deuxième image, et étant précisé que l'étage de combinaison (LCS) est construit de façon à pouvoir être capable d'exécuter les liaisons logiques suivantes sur lesdites variables logiques ($\Delta i_{k-2}$, $\Delta i_{k+2}$):

$$\Delta i_{k-2} \ \& \ \Delta i_{k+2} = b_1$$

$$\Delta i_{k-2} \ \& \ \overline{\Delta i_{k+2}} = b_2$$

$$\overline{\Delta i_{k-2}} \ \& \ \Delta i_{k+2} = b_3$$

$$\overline{\Delta i_{k-2}} \ \& \ \overline{\Delta i_{k+2}} = b_4$$

où $b_1$ est l'information, relative aux segments, pour les portions de l'image déplacées, $b_2$ est l'information, relative aux segments, pour l'arrière-plan qui devient visible, $b_3$ est l'information, relative aux segments, pour l'arrière-plan qui va être recouvert et $b_4$ est l'information, relative aux segments, pour l'arrière-plan statique; et en ce que l'on amène les signaux de sortie des organes de valorisation des coefficients ($a_{k-2}$, $a_k$)

aux entrées de l'organe de sommation (SE) à la sortie duquel on peut prélever le signal de sortie ($I_{k-1}$) interpolé, permettant l'adaptation du déplacement.

5. Application du procédé selon la revendication 1, 2 ou 3 pour la reconstruction, du côté du récepteur, des images de télévision suatées du côté de l'émetteur.

6. Application du procédé selon la revendication 1, 2 ou 3, pour générer, du côté du récepteur, des images de télévision supplémentaires.

7. Application du procédé selon la revendication 5, pour éliminer le papillotement de la restitution dans le cas de la télévision standard en augmentant la fréquence de restitution des images, les images de télévision générées en supplément étant représentées sur le moniteur de restitution entre les images de télévision représentées de façon standard.

8. Application du procédé selon la revendication 1, 2 ou 3, pour supprimer le bruit lors de la restitution d'images de télévision transmises ou enregistrées avec un enregistreur vidéo.

**Claims**

1. A method for the motion adaptive interpolation of non-transmitted television image sequences formed of at least two transmitted television images, with the received television images being segmentally divided into stationary and moving components and the displacement of the moving components being determined picture element by picture element, characterised in that in addition, the television images are segmentally divided into background regions which become visible again due to the movement and those which are going to be hidden again due to the movement so that a total of four different characteristic segment informations are available which are formed as follows from the two image difference signals of three successively transmitted television images:

a first segment information (b1) for moving image portions is generated by way of an AND linkage of the two image difference signals;

a second and third segment information (b2, b3) for background becoming visible again due to movement and background going to be covered is generated by an AND linkage of one of the two image difference signals and the respectively other inverse image difference signal;

a fourth segment information (b4) for stationary background is generated by an AND linkage of the two inverse image difference signals;

interpolated luminance values from transmitted luminance values for each pixel of a non-transmitted image or a newly to be generated intermediate image are formed according to the following relationship:

$$I_{k-1}(x,y) = a_{k-2}(x-d_x/2,\ y-d_y/2)\ \cdot\ I_{k-2}(x-d_x/2,\ y-d_y/2)$$

$$+\ \ a_k(x+d_x/2,\ y+d_y/2)\ \cdot\ I_k(x+d_x/2,\ y+d_y/2)$$

with the coefficients:

$$a_{k-2}(x-d_x/2,\ y-d_y/2)\ =\ \frac{n-m}{n}$$

$$a_k\ \ (x+d_x/2),\ y+d_y/2)\ =\ \frac{m}{n}$$

where x and y are the location variables of an image, I represents the luminance value of an image, k the running image index, $d_x$ and $d_y$ the whole number displacement components for each pixel, m the number of interpolated images with respect to the number n of transmitted images where m = 1, 2, . . ., n-1, and upon the occurrence of the first and fourth segment informations (b1, b4) $a_{k-2}$ is set to equal (n-m)/n and $a_k$ = m/n, upon the occurrence of the second segment information (b2) $a_k$ is set to equal 1 and $a_{k-2}$ = 0, upon the occurrence of the third segment information (b3) $a_k$ is set to equal 0 and $a_{k-2}$ = 1 and upon the occurrence of the fourth segment information (b4) $d_x$ is additionally set to equal $d_y$ = 0.

2. A method according to claim 1, characterised in that displacement from luminance values $I_{k-2}$ (x-$d_x$/2, y-$d_y$/2) and $I_k$ (x+$d_x$/2, y+$d_y$/2) that are not whole numbers are obtained by bilinear interpolation and utilisation of four adjacent pixel luminance values.

3. A method according to claim 1 or 2, characterised in that the displacement is formed from estimated values which are optimised by means of recursive steps in that a correction value is added to each estimated value so that a new estimated value is produced, with the correction value being determined from a quotient whose divisor is obtained from the averaging of derivatives of the autocorrelation function of the image sequence just being received and the crosscorrelation function between the momentarily received image sequence with a previously received image sequence.

4. Arrangement for the motion adaptive interpolation of television image sequences, the arrangement comprising a motion adaptive interpolator including two image memories (Sp1, Sp2) for two transmitted

9

television images $(I_{k-2}, I_k)$, two bilinear interpolators (BI1, BI2) as well as a coefficient evaluator $(a_{k-2}, a_k)$ controllable as a function of the spacing in time of successive images as well as a summing device (SE), with said image memories (Sp1, Sp2) being provided with addressing inputs (A1, A2, A3, A4) through which they receive the location information (x, y) regarding the pixel presently to be evaluated by addition (A3, A4) and subtraction (A1, A2) of the whole number estimated displacement values (dx/2, dy/2) determined by means of a displacement estimator and said image memories (Sp1, Sp2) have four outputs connected with the inputs of the bilinear interpolators (BI1, BI2) for reading out four adjacent pixels, with each of said bilinear interpolators (BI1, BI2) having two further inputs (E1, E2; E3, E4) for receiving the fractions of the estimated displacement values which are not whole numbers, characterised in that, in order to implement the method according to one of claims 1 to 3, it is provided that the controllable coefficient evaluators $(a_{k-2}, a_k)$ are each connected with the outputs of the bilinear interpolators (BI1, BI2) for evaluating the luminance (or chrominance) values determined by means of the bilinear interpolators (BI1, BI2) in dependence on characteristic segment informations for movement in the picture, with a combination stage (LCS) being provided for forming the characteristic segment information (b1, b2, b3, b4); said combination stage receives logic variables $\Delta i_{k-2}, \Delta i_{k+2}$) derived from the image differences $(\Delta I_{k-2}, \Delta I_{k+2})$ between a first image $(I_{k-2})$ and a second image $(I_k)$ following said first image, and between the second image $(I_k)$ and an image $(I_{k+2})$ following the second image, with the combination stage (LCS) being configured in such a manner that it is able to perform the following linkages of said logic variables $(\Delta i_{k-2}, \Delta i_{k+2})$:

$$\Delta i_{k-2} \quad \& \quad \Delta i_{k+2} = b_1$$

$$\Delta i_{k-2} \quad \& \quad \overline{\Delta i_{k+2}} = b_2$$

$$\overline{\Delta i_{k-2}} \quad \& \quad \Delta i_{k+2} = b_3$$

$$\overline{\Delta i_{k-2}} \quad \& \quad \overline{\Delta i_{k+2}} = b_4$$

where $b_1$ is the segment information for moving image portions, $b_2$ is the segment information for background that is becoming visible, $b_3$ is the segment information for background going to be covered and $b_4$ is the segment information for static background, and the outputs of the coefficient evaluators $(a_{k-2}, a_k)$ are connected with the inputs of the summation device (SE) from whose output the motion adaptively interpolated output signal $(I_{k-1})$ can be obtained.

5. Use of the method according to claim 1, 2 or 3 for reconstruction, at the receiving end, of television images that were eliminated at the transmitting end.

6. Use of the method according to claim 1, 2 or 3 for generating additional television images at the receiving end.

7. Use of the method according to claim 5 for removing flicker in the playback of standard television by increasing the image playtback rate in that the additionally generated television images are displayed on the playback monitor between the television images that are displayed in the standard mode.

8. Use of the method according to claim 1, 2 or 3 for the suppression of noise in the playback of transmitted television images or television images recorded by means of a video recorder.

FIR

IE

1 ○————————●————————○ ——[ ]——— ○ —[ M ]

2

St

SDE

FCA

**FIG. 1**

übertragenes Bild **k-2**

**FIG. 2**

ausgelassenes Bild **k-1**

stationärer
Hintergrund

bewegtes
Objekt

$d_x/2$

übertragenes Bild **k**

$d_x$

FIG. 3

$I_{k+2}$ $\boxed{\tau_4}$ $I_k$ $\boxed{\tau_4}$ $I_{k-2}$

$\Delta I_{k-2}$   TBL $\Delta i_{k-2}$   LCS

$\Delta I_{k+2}$   $\Delta i_{k+2}$

b1
b2
b3
b4

FIG. 5

übertragenes Bild k-2

ausgelassenes Bild k-1

$I_{k-1}(x,y)$   übertragenes Bild k

$I_k(x,y)$

$\vec{U}(x,y)=(d_x,d_y)$

2

FIG. 4

FIG. 6

Interpolator-Ausgangssignal $I_{k-1}(x,y)$

$I_{k-2}(x - \frac{dx}{2}, y - \frac{dy}{2})$     $a_{k-2}$     SE     $a_k$     $I_k(x + \frac{dx}{2}, y + \frac{dy}{2})$

E1

BI 1     E2

K1  K2  K3  K4

4 Nachbarbildpunkte

Sp 1

Bild (k-2)

A1     A2

Bruchteile
von dx,dy

x - integer $(\frac{dx}{2})$     y - integer $(\frac{dy}{2})$

E3

BI 2     E4

K5  K6  K7  K8

Sp 2

Bild (k)

A3     A4

Bruchteile
von dx,dy

x + integer $(\frac{dx}{2})$     y + integer $(\frac{dy}{2})$

vom     Displacement     -     Estimator

EP 0 154 125 B1

FIG. 7

EP 0 154 125 B1

| Segmentinformationen | Koeffizienten | Interpolator-Ausgangssignal - $I_{k-1}(x,y)$ |
|---|---|---|
| $b_1$ | $a_k = a_{k-2} = \frac{1}{2}$ | $\frac{1}{2} \cdot I_{k-2}(x - \frac{dx}{2}, y - \frac{dy}{2}) + \frac{1}{2} \cdot I_k(x + \frac{dx}{2}, y + \frac{dy}{2})$ |
| $b_2$ | $dx = dy = 0$ <br> $a_k = 1, a_{k-2} = 0$ | $1 \cdot I_k(x,y)$ |
| $b_3$ | $dx = dy = 0$ <br> $a_k = 0, a_{k-2} = 1$ | $1 \cdot I_{k-2}(x,y)$ |
| $b_4$ | $dx = dy = 0$ <br> $a_k = a_{k-2} = \frac{1}{2}$ | $\frac{1}{2} \cdot I_{k-2}(x,y) + \frac{1}{2} \cdot I_k(x,y)$ |